# EUROPÄISCHE PATENTSCHRIFT

(11) **EP 2 051 171 B1**
(45) Veröffentlichungstag und Bekanntmachung des Hinweises auf die Patenterteilung: **06.06.2012**
(21) Anmeldenummer: 08014353.0
(22) Anmeldetag: 12.08.2008
(51) Int. Cl.: G06F 13/38, G06F 13/42

(54) **Portabler Datenträger**
Portable data carrier
Support de données portatif

(30) Priorität: 12.09.2007 DE 102007043343
(43) Veröffentlichungstag der Anmeldung: 22.04.2009
(73) Patentinhaber: Giesecke & Devrient GmbH, 81677 München (DE)
(72) Erfinder: Grobbel, Hubertus, 81829 München (DE); Baldischweiler, Michael, 81825 München (DE)

(56) Entgegenhaltungen:
- US-B1- 6 351 489
- "S2C INTERFACE FOR NFC: ADDING A GENERAL PURPOSE INTERFACE BETWEEN NFC AND SECURE IC TO SECURE NFC" INTERNET CITATION 21. Januar 2005 (2005-01-21), XP002410138 Gefunden im Internet: URL:http://www.nxp.com/acrobat_download/ot her/identification/S2C_survey_10.p [gefunden am 2006-12-04]

## Beschreibung

Die vorliegende Erfindung betrifft ein Verfahren zur direkten Datenkommunikation eines portablen Datenträgers mit einer NFC-Einrichtung eines mobilen Endgeräts, beispielsweise eines Mobilfunkendgeräts, sowie einen entsprechenden portablen Datenträger.

Aktuelle Mobilfunkendgeräte, Handhelds und dergleichen sind vielfach mit einer NFC-Einrichtung ("Near Field Communication") zum kontaktlosen Austausch von Daten im Nahbereich ausgestattet. Über einen solchen Datenaustausch können verschiedene Transaktionen vorgenommen werden, beispielsweise Bezahlvorgänge im öffentlichen Personennahverkehr und dergleichen. Auch ein einfaches Laden und Installieren von neuen Applikationen kann mittels NFC vorgenommen werden.

Ein mobiles Endgerät mit einer NFC-Einrichtung besitzt in der Regel unterschiedliche Schnittstellen zu portablen Datenträgern. Ein Mobilfunkendgerät kann z.B. außer einer (U)SIM-Mobilfunkkarte eine Massenspeicherkarte aufnehmen oder mit einem anderen portablen Datenträger, z.B. über eine USB-Schnittstelle oder dergleichen, koppelbar sein. Es ist wünschenswert, dass in dem Mobilfunkendgerät jeweils eine direkte Datenkommunikationsverbindung zwischen einer dieser portablen Datenträger und der NFC-Einrichtung hergestellt werden kann, um eine effektive direkte Datenkommunikation zwischen der NFC-Einrichtung und dem jeweiligen Datenträger zu ermöglichen. Zu diesem Zweck kann die Leseeinrichtung für den jeweiligen Datenträger in dem Endgerät direkt mit der NFC-Einrichtung verbunden sein. Auf diese Weise kann beispielsweise eine sichere Massenspeicherkarte, z.B. eine SD-Karte ("Secure Digital Memory Card"), als Sicherheitselement für so genanntes "Secure-NFC" eingesetzt werden, oder Applikationen auf der (U)SIM-Mobilfunkkarte oder einem anderen mit dem Mobilfunkendgerät gekoppelten Datenträger können direkt über die NFC-Einrichtung angesprochen werden. Ein Umweg übertragener Daten über einen Prozessor des Mobilfunkendgeräts ist dann nicht notwendig.

Eine direkte Datenkommunikation zwischen einer NFC-Einrichtung eines mobilen Endgeräts und einem solchen portablen Datenträger ist vor allem aus Performancegründen wünschenswert, jedoch nach dem Stand der Technik nur sehr eingeschränkt möglich. Einerseits unterstützen die meisten NFC-Einrichtungen in der Regel das jeweilige Kommunikationsprotokoll nicht, gemäß welchem der jeweilige Datenträger mit einer entsprechenden Leseeinrichtung des Endgeräts kommuniziert. Andererseits sind in der Regel alle Anschlüsse einer Leseeinrichtungsschnittstelle, über welche der Datenträger mit der Leseeinrichtung des Endgeräts verbunden ist, durch das Kommunikationsprotokoll, gemäß welchem der Datenträger über die Leseeinrichtung mit dem Prozessor des Endgeräts kommuniziert, vollständig belegt. Selbst wenn die Leseeinrichtung direkt mit der NFC-Einrichtung verbunden ist, ist es daher nicht möglich, gemäß einem anderen geeigneten Kommunikationsprotokoll, das von dem Datenträger und der NFC-Einrichtung unterstützt wird, eine direkte Datenkommunikation zwischen der NFC-Einrichtung und dem Datenträger über die Leseeinrichtungsschnittstelle durchzuführen.

Eine spezielle Massenspeicherkarte und ein dazugehöriger Einsteckschacht sind bekannt, welche eine direkte Datenkommunikation zwischen der Massenspeicherkarte und der NFC-Einrichtung erlauben. Dazu umfasst die Massenspeicherkarte im Vergleich zu einer herkömmlichen Massenspeicherkarte zwei zusätzliche Anschlüsse, die die Schnittstelle über den Standard hinausgehend erweitern. Die Datenkommunikation zwischen der Karte und der NFC-Einrichtung verläuft hierbei mittels eines proprietären Kommunikationsprotokolls, des ursprünglich von der Firma Philips entwickelten S²C-Protokolls, welches von der Massenspeicherkarte und der entsprechend eingerichteten NFC-Einrichtung unterstützt wird (s.a. Artikel: "S2C Interface for NFC: Adding a general purpose interface between NFC and Secure IC to Secure NFC").

US 6 351 489 N1 offenbart ein Protokoll mit einer einzigen Buslinie, die ein durch ein Datensignal moduliertes Taktsignal überträgt.

Zur direkten Datenkommunikation zwischen einer SIM-Mobilfunkkarte und einer NFC-Einrichtung eines Mobilfunkendgeräts schlägt die EP 1 612 985 A1 ein Kommunikationsprotokoll vor, welches eine bidirektionale Kommunikation in Duplex-Betriebsweise auf einer Leitung über einen Anschluss der SIM-Mobilfunkkarte ermöglicht, das Single-Wire-Protokoll (SWP). Auf diese Weise kann eine Datenkommunikation zwischen der SIM-Mobilfunkkarte und der NFC-Einrichtung über einen einzelnen unbelegten Anschluss der Schnittstelle der SIM-Mobilfunkkarte durchgeführt werden.

Eine direkte Datenkommunikation zwischen einem portablen Datenträger und der NFC-Einrichtung eines mobilen Endgeräts ist also bisher nur dann möglich, wenn entweder die Leseeinrichtungsschnittstelle des Datenträgers noch über zumindest einen unbelegten Anschluss verfügt, oder aber die Leseeinrichtungsschnittstelle des Datenträgers um neue Anschlüsse ergänzt wird.

Es ist demnach die Aufgabe der vorliegenden Erfindung, eine direkte Datenkommunikation zwischen einem portablen Datenträger und insbesondere einer NFC-Einrichtung eines mobilen Endgeräts auf einfache Weise zu ermöglichen.

Diese Aufgabe wird durch ein Verfahren und einen portablen Datenträger mit den Merkmalen der unabhängigen Ansprüche gelöst. Vorteilhafte Ausgestaltungen und Weiterbildungen sind in den abhängigen Ansprüchen angegeben.

Die vorliegende Erfindung basiert auf dem Grundgedanken, zur Datenkommunikation zwischen dem Datenträger und der Leseeinrichtung eine zwischen dem Datenträger und der Leseeinrichtung bestehende Taktleitung zu verwenden und zu übertragende Daten durch Modulation eines über die Taktleitung übertragenen Taktsignals durch ein Datensignal zu übertragen.

Demnach umfasst ein Verfahren zur Datenkommunikation zwischen zumindest einem portablen Datenträger und einer NFC-Einrichtung eines mobilen Endgeräts über eine mit dem Endgerät verbundene Leseeinrichtung die Schritte des Kontaktierens des zumindest einen Datenträgers mit der Leseeinrichtung, des Aufbauens einer Datenkommunikationsverbindung zwischen dem zumindest einen Datenträger und der NFC-Einrichtung über die Leseeinrichtung und des Durchführens einer direkten Datenkommunikation zwischen dem zumindest einen Datenträger und der NFC-Einrichtung über die aufgebaute Datenkommunikationsverbindung. Dementsprechend wird die Datenkommunikation zwischen der Leseeinrichtung und dem zumindest einen Datenträger erfindungsgemäß durch Modulieren eines über eine Taktleitung zwischen der Leseeinrichtung und dem zumindest einen Datenträger übertragenen Taktsignals durch ein Datensignal durchgeführt.

Physikalisch wird die direkte Verbindung zwischen dem zumindest einen Datenträger und der NFC-Einrichtung durch Kontaktieren des zumindest einen Datenträgers mit der Leseeinrichtung über seine Leseeinrichtungsschnittstelle hergestellt. Die Leseeinrichtung ist ihrerseits mit der NFC-Einrichtung verbunden und kann eingerichtet sein, mehrere Datenträger gleichzeitig aufzunehmen.

Über diese direkte physikalische Verbindung wird die Datenkommunikationsverbindung zwischen der NFC-Einrichtung und dem zumindest einen Datenträger hergestellt. Dabei repräsentiert die Taktleitung zwischen der Leseeinrichtung und dem zumindest einen Datenträger einen Abschnitt der Datenkommunikationsverbindung, nämlich denjenigen zwischen der Leseeinrichtung und dem zumindest einen Datenträger. Der andere Abschnitt der Datenkommunikationsverbindung verläuft entsprechend zwischen der Leseeinrichtung und der NFC-Einrichtung. Das Aufbauen der Datenkommunikationsverbindung schafft die logische Grundlage für das Durchführen der direkten Datenkommunikation. Es wird in der NFC-Einrichtung, in der Leseeinrichtung und in dem zumindest einen Datenträger jeweils ein geeignetes Kommunikationsprotokoll bereitgestellt.

Gemäß dem beschriebenen Verfahren kann eine direkte Datenkommunikation zwischen dem zumindest einen Datenträger und der NFC-Einrichtung durchgeführt werden, ohne dass die Leseeinrichtungsschnittstelle des Datenträgers über einen unbelegten Anschluss verfügen oder um zusätzliche Anschlüsse ergänzt werden muss. Die Leseeinrichtungsschnittstelle kann unverändert bleiben, da keine zusätzlichen Anschlüsse zur Datenkommunikation zwischen dem Datenträger und der NFC-Einrichtung notwendig sind. Die Anschlussbelegung, die durch das Kommunikationsprotokoll festgelegt wird, gemäß welchem der Datenträger über die Leseeinrichtung mit einem Prozessor des Endgeräts kommuniziert, kann ebenfalls unverändert bleiben.

Durch die Verwendung der Taktleitung zur direkten Datenkommunikation zwischen dem Datenträger und der Leseeinrichtung kann die Leseeinrichtungsschnittstelle ohne Veränderung sowohl zur direkten Datenkommunikation zwischen dem Datenträger und der NFC-Einrichtung als auch zur direkten Datenkommunikation des Datenträgers mit dem Prozessor des Endgeräts dienen. Weiterhin ist es möglich, gleichzeitig eine direkte Datenkommunikationsverbindung zwischen mehreren Datenträgern und der NFC-Einrichtung aufzubauen, da an der von der Leseeinrichtung gespeisten Taktleitung mehrere Datenträger gleichzeitig angeschlossen sein können.

Für über die Taktleitung zwischen der Leseeinrichtung und dem zumindest einen Datenträger zu übertragende Daten wird ein den Daten entsprechendes Datensignal erzeugt. Das über die Taktleitung von der Leseeinrichtung zu dem zumindest einen Datenträger übertragene Taktsignal wird durch dieses Datensignal moduliert. Dabei kann sowohl die Leseeinrichtung als auch der zumindest eine Datenträger jeweils ein entsprechendes Datensignal erzeugen und das Taktsignal damit modulieren und ein moduliertes Taktsignal demodulieren.

Demgemäß umfasst der erfindungsgemäße Datenträger außer der Leseeinrichtungsschnittstelle, die ausgebildet ist, mit der Leseeinrichtung des mobilen Endgeräts kontaktierbar zu sein, eine Steuereinrichtung, die eingerichtet ist, eine Datenkommunikationsverbindung zu einem über die Leseeinrichtungsschnittstelle kontaktierten mobilen Endgerät aufzubauen und eine Datenkommunikation über die aufgebaute Datenkommunikationsverbindung durchzuführen. Der Datenträger umfasst weiterhin ein von der Steuereinrichtung aktivierbares Datenträgermodem, das eingerichtet ist, ein zumindest zeitweise durch ein Datensignal moduliertes Taktsignal, welches über eine zu der kontaktierten Leseeinrichtung bestehende Taktleitung übertragen wird, zu demodulieren und das Taktsignal seinerseits durch ein Datensignal zu modulieren. Die Steuereinrichtung ist eingerichtet, die Datenkommunikation durch entsprechendes Aktivieren des Datenträgermodems durchzuführen.

Die Leseeinrichtung umfasst ihrerseits ein entsprechendes Leseeinrichtungsmodem und eine entsprechende Steuereinrichtung.

Auf diese Weise wird eine bidirektionale Datenkommunikation zwischen der Leseeinrichtung und dem zumindest einen Datenträger über die Taktleitung ermöglicht. Die Modulation des Taktsignals wird dabei derart durchgeführt, dass Geräte, die an dieselbe Taktleitung angeschlossen sind und über keine Demodulationseinrichtung verfügen, das modulierte Taktsignal weiterhin als gewöhnliches Taktsignal erkennen.

Die direkte Datenkommunikation zwischen der Leseeinrichtung und der NFC-Einrichtung, die die direkte Datenkommunikation zwischen dem zumindest einen Datenträger und der NFC-Einrichtung schließlich komplettiert, wird durch die Leseeinrichtung und die NFC-Einrichtung in einer nachstehend beschriebenen Weise durchgeführt, die von dem Datenträger unabhängig ist. Das heißt, der portable Datenträger eignet sich zur direkten Datenkommunikation mit einer beliebigen Einheit, die eingerichtet ist, eine direkte Datenkommunikation mit der Leseeinrichtung durchzuführen. Dabei kann die direkte Datenkommunikation zwischen dem Datenträger und der Leseeinrichtung wie vorstehend beschrieben über die Taktleitung erfolgen.

Vorzugsweise ist die Leseeinrichtungsschnittstelle derart ausgebildet, dass die Taktleitung durch Kontaktieren des Datenträgers mit der Leseeinrichtung des Endgeräts herstellbar ist und die Datenkommunikationsverbindung zwischen dem Datenträger und der Leseeinrichtung durch die Taktleitung gebildet ist.

Die Steuereinrichtung kann Empfangsdaten, die einem Empfangsdatensignal entsprechen, welches durch Demodulation des Taktsignals durch das Datenträgermodem erhalten wird, gemäß einem vorgegebenen Kommunikationsprotokoll verarbeiten. Gleichermaßen kann die Steuereinrichtung Sendedaten, die einem Sendedatensignal entsprechen, durch welches das Taktsignal durch das Datenträgermodem moduliert wird, gemäß dem Kommunikationsprotokoll erzeugen. Empfangsdaten sind dabei die Daten, die der Datenträger im Rahmen der direkten Datenkommunikation von der Leseeinrichtung empfängt. Desgleichen entsprechen Sendedaten den Daten, die der Datenträger im Rahmen dieser Datenkommunikation an die Leseeinrichtung sendet.

Vorzugsweise wird das Datenträgermodem von der Steuereinrichtung zum Durchführen der Datenkommunikation derart aktiviert, dass zum Empfangen eines Empfangsdatensignals das Taktsignal demoduliert wird, wenn das Taktsignal einen vorbestimmten Wert annimmt, z.B. eine logische "0", und zum Senden eines Sendedatensignals das Taktsignal durch das Sendedatensignal moduliert wird, wenn das Taktsignal einen anderen als den vorbestimmten Wert annimmt, z.B. eine logische "1". Mit Hilfe eines solchen Zeit-Multiplexverfahrens ist eine kollisionsfreie bidirektionale Datenkommunikation in Halbduplex-Betriebsweise zwischen der Leseeinrichtung und dem zumindest einen Datenträger sichergestellt.

Die Leseeinrichtung kann erkennen, ob mehr als ein Datenträger über die Taktleitung, die die direkte Datenkommunikationsverbindung zwischen der Leseeinrichtung und dem zumindest einen Datenträger darstellt, angeschlossen ist. In der Regel sind die Datenträger in Form einer Parallelschaltung an der Taktleitung angeschlossen und die Leseeinrichtung kann z.B. durch Messen eines entsprechenden Spannungspegels die Anzahl der angeschlossenen Datenträger bestimmen.

In dem Fall, in dem mehrere Datenträger gleichzeitig an der Taktleitung angeschlossen sind, kann die Leseeinrichtung die direkte Datenkommunikation mit den Datenträgern über ein Arbiter-Verfahren steuern. Ein Arbiter-Verfahren ist geeignet, Zugriffskonflikte zu lösen, beispielsweise durch Einführen von Prioritäten. Dies ist immer dann notwendig, wenn mehrere Instanzen gleichzeitig auf einen Datenübertragungskanal zugreifen wollen. Es kann dadurch z.B. vermieden werden, dass mehr als ein Datenträger innerhalb eines Zeitintervalls das Taktsignal durch ein Datensignal moduliert.

Dazu kann das Arbiter-Verfahren beispielsweise die jeweils direkte Datenkommunikationsverbindung, also die Taktleitung, zu allen bis auf einen der an der Taktleitung angeschlossenen Datenträger unterbrechen. In diesem Zustand kann die Datenkommunikation mit diesem verbleibenden angeschlossenen Datenträger konfliktfrei durchgeführt werden. Danach kann die Taktleitung zu diesem Datenträger unterbrochen und zu einem weiteren Datenträger, dessen Verbindung mit der Leseeinrichtung zuvor unterbrochen worden ist, wieder hergestellt werden. Dann kann die Datenkommunikation mit dem weiteren Datenträger störungsfrei durchgeführt werden. Diese Vorgehensweise kann solange iteriert werden, bis die Datenkommunikation mit allen ursprünglich an der Taktleitung angeschlossenen Datenträgern abgeschlossen ist.

Vorzugsweise kann auch der zumindest eine Datenträger eingerichtet sein, die direkte Datenkommunikationsverbindung zu der Leseeinrichtung zumindest zeitweise zu unterbrechen, beispielsweise wenn seine Datenkommunikation mit der Leseeinrichtung abgeschlossen ist oder er keine Datenkommunikation mit der NFC-Einrichtung wünscht. Auf diese Weise kann das Arbiter-Verfahren unterstützt werden, da sich die Anzahl der gleichzeitig an der Taktleitung angeschossenen Datenträger verringert und dadurch weniger potentielle Kommunikationskonflikte aufzulösen sind. Es ist auch möglich, dass der Datenträger die Datenkommunikationsverbindung aufgrund eines von der Leseeinrichtung empfangenen Kommandos zeitweilig unterbricht. Auch auf diese Weise kann das Arbiter-Verfahren die Datenkommunikation mit mehreren an der Taktleitung angeschlossenen Datenträgern steuern.

In welcher Weise die zwischen der Leseeinrichtung und dem zumindest einen Datenträger zu übertragenden Daten codiert werden und gemäß welchem Kommunikationsprotokoll diese Datenkommunikation zwischen der Leseeinrichtung und dem zumindest einen Datenträger durchgeführt wird, kann geeignet bestimmt werden. Kriterien hierzu sind beispielsweise die Art der zu übertragenden Daten und/oder die spezifischen Anforderungen an die Datenübertragung, wie z.B. eine zu garantierende Datenübertragungsrate, eine Fehlertoleranz und dergleichen. Dabei ist, wie vorstehend bereits erwähnt zu bemerken, dass die direkte Datenkommunikation zwischen der Leseeinrichtung und der NFC-Einrichtung gemäß dem gleichen Kommunikationsprotokoll durchgeführt werden kann, wie die Datenkommunikation zwischen der Leseeinrichtung und dem zumindest einen Datenträger, oder aber nach einem anderen Kommunikationsprotokoll. Die Leseeinrichtung kann also von der NFC-Einrichtung empfangene Daten gemäß demselben Kommunikationsprotokoll an den zumindest einen Datenträger über die Taktleitung nach dem vorstehend beschriebenen Verfahren weiterleiten, wenn der Datenträger das entsprechende Protokoll unterstützt, gemäß welchem die Leseeinrichtung die Daten von der NFC-Einrichtung empfangen hat. Ist dies nicht der Fall, kann für die Datenkommunikation zwischen der Leseeinrichtung und dem zumindest einen Datenträger ein geeignetes anderes Kommunikationsprotokoll verwendet werden. Eine entsprechende Protokollumsetzung findet dabei in der Leseeinrichtung statt. Analoges gilt für eine Datenkommunikation in die umgekehrte Richtung, also von dem zumindest einen Datenträger zu der NFC-Einrichtung. Insbesondere kann die direkte Datenkommunikation zwischen der Leseeinrichtung und der NFC-Einrichtung gemäß bekannter Kommunikationsprotokolle für eine derartige Anwendung, beispielsweise gemäß dem S²C-Protokoll oder dem Single-Wire-Protokoll, durchgeführt werden.

Vorzugsweise ist der portable Datenträger eine Chipkarte, eine (U)SIM-Mobilfunkkarte, eine Massenspeicherkarte, ein USB-Token oder dergleichen.

Ein erfindungsgemäßes System umfasst demnach ein mobiles Endgerät, z.B. ein Mobilfunkendgerät, mit einer NFC-Einrichtung und eine mit dem Endgerät verbundene und mit der NFC-Einrichtung direkt verbundene Leseeinrichtung zum Aufnehmen zumindest eines portablen Datenträgers, z.B. einer (U)SIM-Mobilfunkkarte, einer Massenspeicherkarte oder dergleichen, sowie zumindest einen vorstehend beschriebenen portablen Datenträger. Die Komponenten eines solchen Systems sind geeignet, das vorstehend beschriebene Verfahren zur direkten Datenkommunikation zwischen der NFC-Einrichtung und dem zumindest einen Datenträger durchzuführen.

Die vorliegende Erfindung wird im Folgenden mit Bezug auf die beiliegenden Zeichnungen beispielhaft beschrieben. Darin zeigen:
- Figur 1: eine bevorzugte Ausführungsform eines erfindungsgemäßen Datenträgers;
- Figur 2: ein System, umfassend ein mobiles Endgerät mit einer NFC- Einrichtung sowie einer Leseeinrichtung zum Aufnehmen des Datenträgers aus Figur 1; und
- Figur 3: den Aufbau eines Leseeinrichtungsmodems der Leseeinrich- tung aus Fig. 2 und eines Datenträgermodems des Datenträ- ger aus Fig. 1 in einer jeweils bevorzugten Ausführungsform.

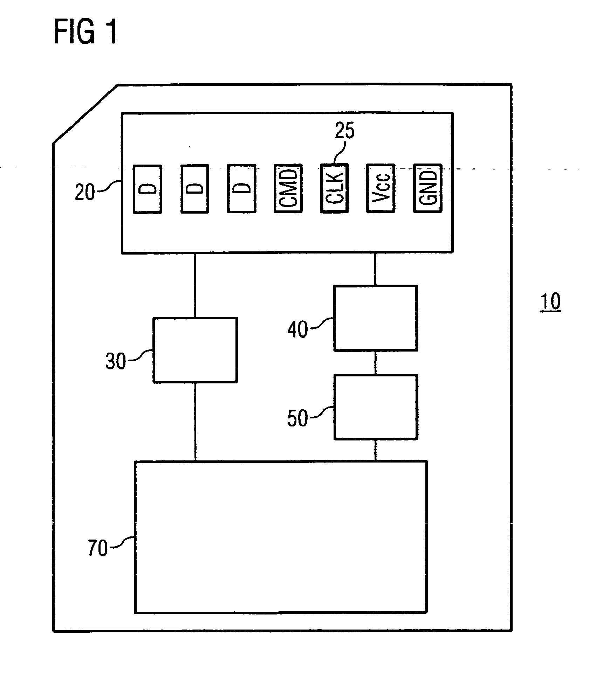

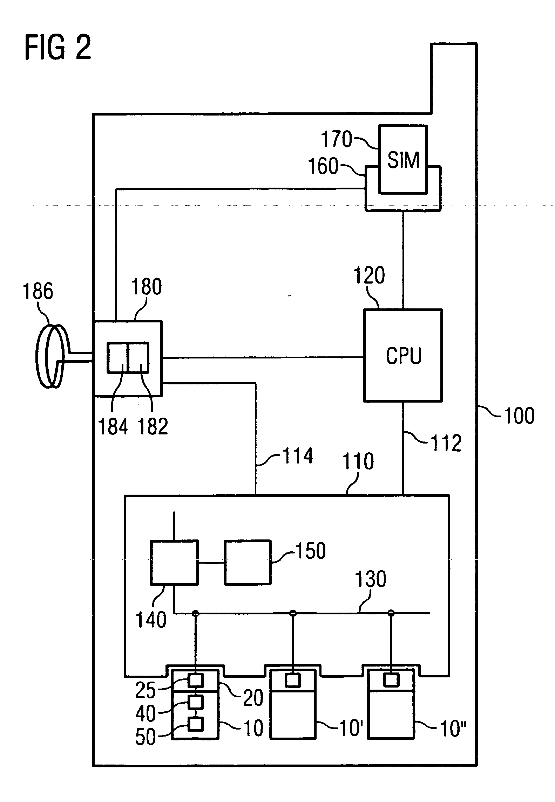

Mit Bezug auf die Figuren 1 und 2 umfasst ein portabler Datenträger 10 eine Leseeinrichtungsschnittstelle 20 und eine Kommunikationseinrichtung 30. Über die Leseeinrichtungsschnittstelle 20 kann der Datenträger 10 mit einer Leseeinrichtung 110 eines mobilen Endgeräts 100, z.B. eines Mobilfunkendgeräts, kontaktiert werden, wie es in Figur 2 dargestellt ist. Auf diese Weise wird eine physikalische Verbindung zwischen dem Datenträger 10 und unterschiedlichen Einheiten des Endgeräts 100 hergestellt, mit welchen der Datenträger 10 anschließend eine Datenkommunikationsverbindung über die Leseeinrichtung 110 aufbauen kann. Solche Einheiten sind z.B. ein Prozessor (CPU) 120 oder eine NFC-Einrichtung 180, welche selbst jeweils direkt über Verbindungsleitungen 112,114 mit der Leseeinrichtung 110 verbunden sind.

Die Endgeräteschnittstelle 20 umfasst eine Vielzahl von Anschlüssen D, CMD, CLK, VCC, GND. Die Anschlüsse werden auch als die Kontakte des tragbaren Datenträgers bezeichnet. Ein Kommunikationsprotokoll, welches von der Kommunikationseinrichtung 30 des Datenträgers 10 unterstützt wird, definiert die Belegung der Anschlüsse. Die Kommunikationseinrichtung 30 steuert die Datenkommunikation des Datenträgers 10 mit dem Prozessor 120 des Endgeräts 100. Mit D bezeichnete Anschlüsse dienen der Übertragung von Daten. Über den CMD-Anschluss werden Kommandos von der Leseeinrichtung 110 an den Datenträger 10 übertragen, der ebenfalls über diesen Anschluss auf die Kommandos antwortet. In der Regel verhält sich die Leseeinrichtung 110 gegenüber dem Datenträger 10 als "Master", der Datenträger 10 antwortet als "Slave". Die Anschlüsse VCC und GND dienen der Energieversorgung des Datenträgers 10, der in der Regel über keine eigene Energieversorgung verfügt. Die Energie zum Betreiben des Datenträgers 10 wird durch eine Energiequelle des Endgeräts 100, z.B. eine Batterie (nicht gezeigt), bereitgestellt. Es ist auch möglich, dass der Datenträger 10 über die NFC-Einrichtung 180 mit Energie versorgt wird, welche diese ihrerseits auch zur eigenen Energieversorgung aus einem elektromagnetischen Wechselfeld bezieht. Auf diese Weise kann der Datenträger 10 auch dann mit der NFC-Einrichtung 180 Daten austauschen, wenn diese sich in dem Feld befindet, das Endgerät 100 jedoch ausgeschaltet ist. Der CLK-Anschluss 25 dient zum Herstellen einer Taktleitung 130 zwischen der Leseeinrichtung 110 und dem Datenträger 10.

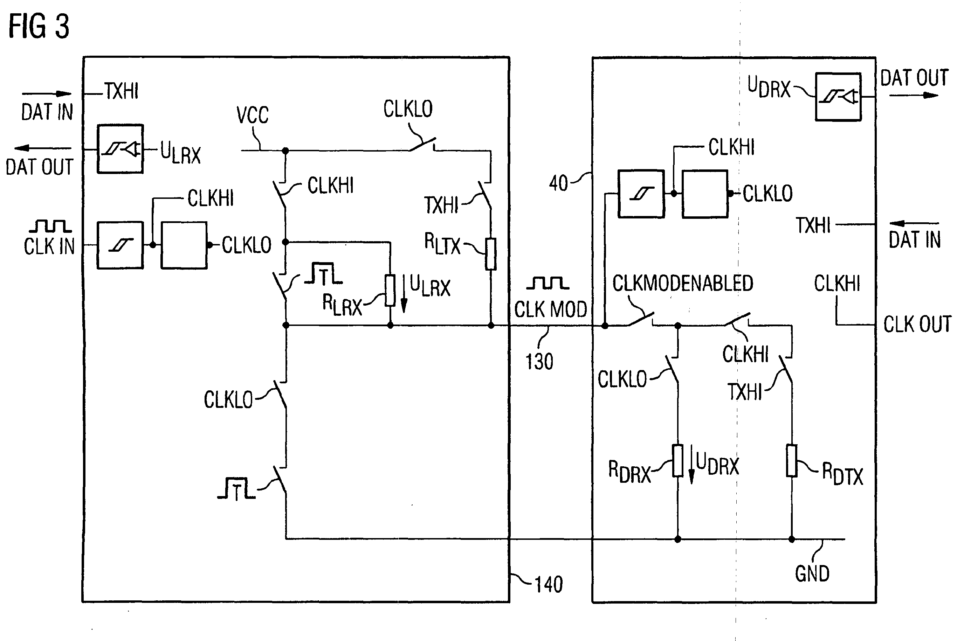

Der Datenträger 10 umfasst weiterhin ein Datenträgermodem 40 und eine Steuereinrichtung 50, welche einer direkten Datenkommunikation zwischen dem Datenträger 10 und der NFC-Einrichtung 180 dienen und welche nachstehend mit Bezug auf Figur 3 genauer beschrieben werden. Ein Speicher 70 dient dem Datenträger 10 zum Speichern von Daten und/oder Applikationen. Die Kommunikationseinrichtung 30, das Datenträgermodem 40, die Steuereinrichtung 50 und der Speicher 70 können als Bestandteile eines integrierten Schaltkreises oder jeweils als separate integrierte Schaltkreise ausgebildet sein.

Der Datenträger 10 kann eine Massenspeicherkarte, z.B. eine SD-Karte, eine (U)SIM-Mobilfunkkarte, eine Chipkarte, ein USB-Token oder dergleichen sein.

Mit Bezug auf Fig. 2 umfasst das als Mobilfunkendgerät ausgebildete mobile Endgerät 100 die vorstehend erwähnte Leseeinrichtung 110 zum Aufnehmen von portablen Datenträgers 10, 10',10", den Prozessor 120 und die NFC-Einrichtung 180. Diese umfasst eine Steuereinrichtung 182, ein Modem 184 und eine Antenne 186. Das Mobilfunkendgerät 100 umfasst weiterhin eine Aufnahmeeinrichtung 160 für eine (U)SIM-Mobilfunkkarte 170. Die Aufnahmeeinrichtung 160 kann analog zu der Leseeinrichtung 110 aufgebaut sein. Der Prozessor 120 ist zur direkten Datenkommunikation mit der Aufnahmeeinrichtung 160, der NFC-Einrichtung 180 und der Leseeinrichtung 110 verbunden. Auf diese Weise kann der Prozessor 120 jeweils in eine direkte Datenkommunikation mit einem der Datenträger 10, 10', 10" oder der (U)SIM-Mobilfunkkarte 170 treten und direkt mit der NFC-Einrichtung 180 kommunizieren. Gleichermaßen sind die Aufnahmeeinrichtung 160 und die Leseeinrichtung 110 direkt mit der NFC-Einrichtung 180 verbunden.

Die Leseeinrichtung 110 umfasst eine Taktleitung 130, über welche die mit der Leseeinrichtung 110 kontaktierten Datenträger 10, 10', 10" mit einem Taktsignal versorgt werden. Das Taktsignal kann dabei in der Leseeinrichtung 110 selbst erzeugt werden oder aber von außen, beispielsweise von der NFC-Einrichtung 180, in die Leseeinrichtung 110 eingebracht werden. In die Taktleitung 130 ist ein Leseeinrichtungsmodem 140 eingefügt, welches mit einer Steuereinrichtung 150 der Leseeinrichtung 110 verbunden ist. Das Leseeinrichtungsmodem 140 und Steuereinrichtung 150 werden nachstehend mit Bezug auf Figur 3 genauer beschrieben.

Über die Leseeinrichtungsschnittstelle 20 des Datenträgers 10 kann wie vorstehend erwähnt eine direkte Datenkommunikation zwischen der NFC-Einrichtung 180 und dem Datenträger 10 durchgeführt werden. Dazu wird das auf der Taktleitung 130 übertragene Taktsignal durch ein Datensignal moduliert. Modulation und Demodulation des Taktsignals erfolgen dabei jeweils durch das Datenträgermodem 40 bzw. das Leseeinrichtungsmodem 140. Die Daten, die dem Datensignal entsprechen, durch welches das Taktsignal moduliert wird, werden jeweils von der Steuereinrichtung 50 des Datenträgers 10 bzw. der Steuereinrichtung 150 der Leseeinrichtung 110 erzeugt oder empfangen bzw. verarbeitet oder weitergeleitet. Auf diese Weise kann trotz der Tatsache, dass alle Anschlüsse der Leseeinrichtungsschnittstelle 20 durch das Kommunikationsprotokoll zur Datenkommunikation mit dem Prozessor 120 vollständig belegt sind, insbesondere die D-Anschlüsse, eine Datenkommunikation gemäß einem zweiten Kommunikationsprotokoll, welches jeweils von den Steuereinrichtungen 50, 150 unterstützt wird, über die Taktleitung 130 durchgeführt werden kann.

Der Datenträger 10 ist dazu über den CLK-Anschluss 25 an der Taktleitung 130 angeschlossen und dadurch über die Leseeinrichtung 110 und die Verbindungsleitung 114 direkt mit der NFC-Einrichtung 180 verbunden. Die direkte Datenkommunikationsverbindung zwischen der NFC-Einrichtung 180 und dem Datenträger 10 kann in zwei Abschnitte unterteilt werden, einmal den zwischen der NFC-Einrichtung 180 und der Leseeinrichtung 110 über die Verbindungsleitung 114, und zum anderen den zwischen der Leseeinrichtung 110 und dem Datenträger 10 über die Taktleitung 130.

Die Datenkommunikation zwischen der NFC-Einrichtung 180 und der Leseeinrichtung 110 kann dabei durch ein bekanntes Kommunikationsprotokoll, z.B. das S²C-Protokoll oder das Single-Wire-Protokoll, durchgeführt werden, z.B. abhängig davon, wie die Schnittstelle 114 zwischen der NFC-Einrichtung 180 und der Leseeinrichtung 110 ausgebildet ist. Die Datenkommunikation zwischen der Leseeinrichtung 110 und dem Datenträger 10 über die Taktleitung 130 folgt in der Regel einem anderen Kommunikationsprotokoll, welches von dem Datenträger 10 und der Leseeinrichtung 110 unterstützt wird. In diesem Fall findet in einer Steuereinrichtung 150 der Leseeinrichtung 110 eine Protokollumsetzung statt. In dem Fall, dass der Datenträger 10 und die NFC-Einrichtung 180 dasselbe Kommunikationsprotokoll unterstützen, kann auf eine Protokollumsetzung in der Leseeinrichtung 110 verzichtet werden, und die zu übertragenden Daten werden von der Leseeinrichtung 110 jeweils nur weitergeleitet.

Mit Bezug auf Fig. 3 wird nun die direkte Datenkommunikation zwischen der Leseeinrichtung 110 und dem Datenträger 10 genauer beschrieben. Fig. 3 zeigt dazu schematisch einen möglichen Aufbau des Leseeinrichtungsmodems 140 der Leseeinrichtung 110, welches über die Taktleitung 130 mit dem Datenträgermodem 40 des Datenträgers 10 verbunden ist. Das Leseeinrichtungsmodem 140 erhält Sendedaten DAT IN von der Steuereinrichtung 150 der Leseeinrichtung 110. Diese Sendedaten DAT IN können in der Steuereinrichtung 150 selbst erzeugt werden oder von außen, beispielsweise von der NFC-Einrichtung 180, in die Steuereinrichtung 150 der Leseeinrichtung 110 eingebracht werden. Das den Sendedaten DAT IN innerhalb des Leseeinrichtungsmodems 140 entsprechende Sendedatensignal wird mit TXHI bezeichnet. Empfangsdaten DAT OUT, welche von dem Leseeinrichtungsmodem 140 an die Steuereinrichtung 150 ausgegeben werden, entsprechen einem an einem Widerstand R_{LRX} des Leseeinrichtungsmodems 140 detektierten Spannungsabfallverhalten eines Spannungsabfalls U_{LRX}. Das Leseeinrichtungsmodem 140 umfasst weiterhin einen Widerstand R_{LTX} und optionale Schalter T. Das in das Leseeinrichtungsmodem 140 eingespeiste Taktsignal ist mit CLK IN bezeichnet und das auf der Taktleitung 130 zwischen dem Leseeinrichtungsmodem 140 und dem Datenträgermodem 40 übertragene modulierte Taktsignal ist mit CLK MOD bezeichnet. Der Taktsignalwert "1" entspricht modemintern dem Signal CLKHI und der Taktsignalwert "0" dem Signal CLKLO.

Das Datenträgermodem 40 erhält in analoger Weise Sendedaten DAT IN von der Steuereinrichtung 50, denen ein internes Signal TXHI entspricht. Empfangsdaten DAT OUT, die von dem Datenträgermodem 40 an die Steuereinrichtung 50 weitergegeben werden, werden gemäß einen Spannungsabfallverhalten eines Spannungsabfalls U_{ORX} an einem Widerstand R_{DRX} ermittelt. Weiterhin umfasst das Datenträgermodem 40 einen Widerstand R_{DTX} und einen optionalen Schalter CLKMODENABLED. Dieser Schalter dient dazu, die Datenkommunikation zu unterbrechen. Im Folgenden sei CLKMODENABLED gleich "1", d.h. der entsprechende Schalter ist geschlossen.

Allgemein sind mit den jeweiligen Signalbezeichnungen bezeichnete Schalter in dem Datenträgermodem 40 bzw. dem Leseeinrichtungsmodem 140 genau dann geschlossen, wenn das jeweilige Signal den Wert "1" annimmt.

Daten werden von der Leseeinrichtung 110 zu dem Datenträger 10 übertragen, während das Taktsignal CLK IN den Wert "0" annimmt, wenn also CLKLO gleich "1" ist. In dem Fall, in dem das Sendesignal eine "1" enthält, also TXHI gleich "1" ist, fliest ein Strom und es kann an dem Widerstand R_{DRX} ein Spannungsabfall U_{DRX} detektiert werden. Ist das Signal TXHI gleich "0", so fließt kein Strom und es kann kein Spannungsabfall U_{DRX} detektiert werden. Das Signal CLK MOD bleibt währenddessen weiterhin auf "0", da der Widerstand R_{DRX} einen pulldown auf GND sicherstellt. Die Widerstände R_{DRX} und R_{LTX} sind geeignet zueinander bemessen.

Von dem Datenträger 10 zu der Leseeinrichtung 110 werden Daten übertragen, während das Taktsignal CLK IN den Wert "1" annimmt, d.h. CLKHI gleich "1". Dadurch wird im Leseeinrichtungsmodem 140 der Widerstand R_{LRX} gegen VCC geschaltet und das Potential von CLK MOD auf "1" angehoben. Soll eine logische "1" übertragen werden, d.h. das Sendedatensignal TXHI ist gleich "1" ist, wird der Widerstand R_{DTX} im Datenträgermodem 40 gegen GND geschaltet. Daraufhin fließt ein Strom und es kann an dem Widerstand R_{LRX} ein Spannungsabfall U_{LRX} detektiert werden. Soll eine logische "0" übertragen werden, d.h. TXHI gleich "0", so fließt kein Strom und kein Spannungsabfall U_{LRX} ist zu detektieren. Auch die Widerstände R_{LRX} und R_{DTX} sind geeignet zueinander bemessen. Es versteht sich, dass eine Datenübertragung bei entsprechender Anpassung der Schaltungen jeweils auch gerade bei dem jeweils anderen Zustand des Taktsignals in der entsprechenden Richtung durchgeführt werden kann

Um schnelle Zeitkonstanten der Signalflanken von CLK MOD zu erhalten, wird der Schalter T eingesetzt, mit Hilfe dessen das jeweilige Potential kurzzeitig gegen VCC bzw. GND gezogen wird.

Es können mehrere Datenträger 10, 10', 10" gleichzeitig an der Taktleitung 130 angeschlossen sein (siehe Fig. 2). Dadurch ergibt sich eine Parallelschaltung der jeweiligen Widerstände R_{DRX} der Datenträger 10, 10', 10" und eine Bestimmung eines entsprechenden Spannungsabfalls U_{DRX} wird erschwert. Andererseits ist eine logische "1", die von einem oder mehreren der Datenträgermodems 40 der Datenträger 10, 10', 10" zu dem Leseeinrichtungsmodem 140 übertragen wird, nicht eindeutig einem der Datenträger 10, 10', 10" zuzuordnen.

Um diesem Sachverhalten Rechnung zu tragen, kann die Steuereinrichtung 150 eingerichtet sein, anhand der Parallelschaltung der jeweiligen Widerstände R_{DRX} zu erkennen, ob mehr als ein Datenträger 10, 10', 10" gleichzeitig an der Taktleitung 130 angeschlossen ist. Ist dies der Fall, so steuert die Steuereinrichtung 150 der Leseeinrichtung 110 mittels eines Arbiter-Verfahrens die direkte Datenübertragung mit den Datenträgern 10, 10', 10". Dazu unterbricht die Steuereinrichtung 150 jeweils die Taktleitung 130 zu allen bis auf einen der Datenträger 10', 10" und führt daraufhin konfliktfrei die Datenkommunikation mit dem verbleibenden angeschlossenen Datenträger 10 in der vorstehend beschriebenen Weise durch. Ist das Datenträgermodem 40 mit dem Schalter CLKMODENABLED oder einem ähnlichen Mechanismus ausgestattet, so kann die Steuereinrichtung 50 des Datenträgers 10 mittels dieses Schalters den Datenträger 10 zumindest zeitweise von der Taktleitung 130 trennen. Das kann z.B. geschehen, wenn die Datenkommunikation des Datenträgers 10 mit der Leseeinrichtung 110 abgeschlossen ist oder als Resultat eines entsprechenden von der Leseeinrichtung 110 empfangenen Kommandos.

Die mit Bezug auf Fig. 3 beschriebene Datenkommunikation zwischen der Leseeinrichtung 110 und den Datenträgern 10, 10', 10" kann allgemein zwischen einer Anzahl von Geräten durchgeführt werden, die über eine Taktleitung verbunden sind und von denen eines als "Master" agiert und das Taktsignal CLK IN einspeist, wobei die restlichen Geräte als "Slaves" das Taktsignal empfangen.

## Patentansprüche

1. Verfahren zur Datenkommunikation zwischen zumindest einer ersten Einheit (10, 10', 10") mit Kontakten und einer zweiten Einheit (110), umfassend die Schritte:
- Empfangen eines Taktsignals (CLK IN) auf einem Taktkontakt (CLK) der ersten Einheit (10), welches gemäß einem ersten Datenkommunikationsprotokoll zum Austausch von Daten über einen Datenkontakt (D) der ersten Einheit empfangen wird;
- Übertragen von Daten zwischen der zumindest einen ersten Einheit (10, 10', 10") und der zweiten Einheit (110);
**dadurch gekennzeichnet, dass** die Daten mit Hilfe eines zweiten Datenkommunikationsprotokolls über den Taktkontakt (CLK) übertragen werden durch Modulieren des Taktsignals des ersten Datenkommunikationsprotokolls mit einem Datensignal (TXHI) und Übertragen des modulierten Taktsignals über den Taktkontakt (CLK).

2. Verfahren nach Anspruch 1 **dadurch gekennzeichnet, dass** die zumindest eine erste Einheit ein tragbarer Datenträger ist und die zweite Einheit eine Leseeinrichtung (110) für tragbare Datenträger ist.

3. Verfahren nach Anspruch 2, **dadurch gekennzeichnet, dass** in dem tragbaren Datenträger zum Empfangen von Daten, wenn das Taktsignal (CLK IN) einen vorbestimmten Wert (CLKLO) annimmt, das modulierte Taktsignal demoduliert wird, und zum Senden von Daten, wenn das Taktsignal (CLK IN) einen anderen Wert (CLKHI) als den vorbestimmten Wert (CLKLO) annimmt, das Taktsignal (CLK MOD) durch den tragbaren Datenträger moduliert wird.

4. Verfahren nach Anspruch 2 oder 3, **dadurch gekennzeichnet, dass** die Leseeinrichtung (110) erkennt, ob mehr als ein Datenträger (10,10',10") gleichzeitig über die Datenkommunikationsverbindung (130) mit der Leseeinrichtung (110) verbunden ist.

5. Verfahren nach Anspruch 4, **dadurch gekennzeichnet, dass**, falls mehr als ein Datenträger (10, 10', 10") gleichzeitig über die Datenkommunikationsverbindung (130) mit der Leseeinrichtung (110) verbunden ist, die Leseeinrichtung (110) die direkte Datenkommunikation mit den mehr als einen Datenträgern (10,10', 10") über ein Arbiter-Verfahren steuert.

6. Verfahren nach Anspruch 5, **dadurch gekennzeichnet, dass** das Arbiter-Verfahren die jeweilige Datenkommunikationsverbindung (130) zu allen bis auf einen Datenträger (10', 10") der mehr als einen der mit der Leseeinrichtung über die Datenkommunikationsverbindung (130) verbundenen Datenträger (10, 10', 10") unterbricht und die direkte Datenkommunikation mit dem einen verbleibenden verbundenen Datenträger (10) durchführt.

7. Verfahren nach einem der Ansprüche 1 bis 6, **dadurch gekennzeichnet, dass** der zumindest eine Datenträger (10,10', 10") die Datenkommunikationsverbindung (130) zumindest zeitweise unterbricht.

8. Verfahren nach einem der Ansprüche 1 bis 7, **dadurch gekennzeichnet, dass** die Daten von dem Datenträger zu einer NFC-Einrichtung (180) eines mobilen Endgeräts (100) über die mit dem Endgerät (100) verbundene Leseeinrichtung (110) übertragen werden, mit den Schritten:
- Kontaktieren des zumindest einen Datenträgers (10, 10', 10") mit der Leseeinrichtung (110);
- Aufbauen einer Datenkommunikationsverbindung (130,114) zwischen dem zumindest einen Datenträger (10, 10', 10") und der NFC-Einrichtung (180) über die Leseeinrichtung (110);
- Durchführen einer direkten Datenkommunikation zwischen dem zumindest einen Datenträger (10, 10', 10") und der NFC-Einrichtung (180) über die aufgebaute Datenkommunikationsverbindung (130,114);
wobei die Datenkommunikation zwischen der Leseeinrichtung (110) und dem zumindest einen Datenträger (10, 10', 10") durch Modulieren des über eine Taktleitung (130) zwischen der Leseeinrichtung (110) und dem zumindest einen Datenträger (10, 10', 10") übertragenen Taktsignals (CLKIN) durch das Datensignal (TXHI) durchgeführt wird.

9. Verfahren nach Anspruch 8, **dadurch gekennzeichnet, dass** die direkte Datenkommunikation zwischen der Leseeinrichtung (110) und der NFC-Einrichtung (180) gemäß dem gleichen Kommunikationsprotokoll durchgeführt wird wie die direkte Datenkommunikation zwischen der Leseeinrichtung (110) und dem zumindest einen Datenträger (10, 10', 10").

10. Verfahren nach Anspruch 8 oder 9, **dadurch gekennzeichnet, dass** die direkte Datendatenkommunikation zwischen der Leseeinrichtung (110) und der NFC-Einrichtung (180) mittels des S²C-Protokolls oder des Single-Wire-Protokolls durchgeführt wird.

11. Portabler Datenträger (10), umfassend
eine Leseeinrichtungsschnittstelle (20), die ausgebildet ist, mit einer Leseeinrichtung (110) kontaktierbar zu sein, mit einem Taktkontakt (CLK) zum Empfangen eines Taktsignals (CLK IN) eines ersten Kommunikationsprotokolls und einem Datenkontakt (D) zum Übertragen von Daten gemäß dem ersten Kommunikationsprotokoll über den Datenkontakt (D), und
eine Steuereinrichtung (50), die eingerichtet ist, eine Datenkommunikationsverbindung (130) zu einem über die Leseeinrichtungsschnittstelle (20) kontaktierten Endgerät (100) aufzubauen und eine Datenkommunikation mit dem Endgerät (100) über die aufgebaute Datenkommunikationsverbindung (130) durchzuführen, **gekennzeichnet durch**
ein Datenträgermodem (40), das eingerichtet ist, zum Übertragen von Daten über den Taktkontakt als **durch** ein Datensignal (TXHI) moduliertes Taktsignal (CLK IN).

12. Datenträger (10) nach Anspruch 11, **dadurch gekennzeichnet, dass** der Datenträger eingerichtet ist zur Ausführung der Schritte des Datenträgers nach einem Verfahren aus Anspruch 2 bis 10.

13. Datenträger (10) nach Anspruch 11 oder 12, **dadurch gekennzeichnet, dass** das Datenträgermodem eingerichtet ist das Taktsignal zu modulieren, wenn der Pegel des Taktsignals einen ersten Wert annimmt, und das Taktsignal zu demodulieren, wenn der Pegel des Taktsignals einen zweiten Wert annimmt.

14. Datenträger (10) nach einem der Ansprüche 11 bis 13, **dadurch gekennzeichnet, dass** die Leseeinrichtungsschruttstelle (20) derart ausgebildet ist, dass die Taktleitung (130) durch Kontaktieren des Datenträgers (10) mit der Leseeinrichtung (110) des Endgeräts (100) herstellbar ist und die Datenkommunikationsverbindung (130) zwischen dem Datenträger (10) und der Leseeinrichtung (110) durch die Taktleitung (130) gebildet ist.

15. Datenträger (10) nach einem der Ansprüche 11 bis 14, **dadurch gekennzeichnet, dass** der Datenträger (10) eine Chipkarte oder eine (U)SIM-Mobilfunkkarte oder eine Massenspeicherkarte oder ein USB-Token ist.

16. System, umfassend ein zweite Einheit, vorzugsweise mit Leseeinrichtung (110) zum Aufnehmen zumindest eines portablen Datenträgers (10, 10', 10") als eine erste Einheit, sowie zumindest die erste Einheit, die vorzugsweise als portabler Datenträger (10) nach einem der Ansprüche 11 bis 15 ausgestaltet ist, wobei die erste und die zweite Einheit angepasst sind zur Ausführung eines Verfahrens nach einem der Ansprüche 1 bis 10.

17. System, umfassend ein mobiles Endgerät (100) mit einer NFC-Einrichtung (180), eine mit dem Endgerät (100) verbundene und mit der NFC-Einrichtung (180) direkt verbundene Leseeinrichtung (110) zum Aufnehmen zumindest eines portablen Datenträgers (10, 10', 10") sowie zumindest einen portablen Datenträger (10) nach einem der Ansprüche 11 bis 15 und geeignet zum Durchführen eines Verfahrens nach einem der Ansprüche 2 bis 10.

## Claims

1. A method for data communication between at least one first unit (10, 10', 10") with contacts and a second unit (110), comprising the steps of:
- receiving a clock signal (CLK IN) on a clock contact (CLK) of the first unit (10), said signal being received according to a first data communication protocol for exchanging data via a data contact (D) of the first unit;
- transferring data between the at least one first unit (10, 10', 10") and the second unit (110);
**characterized in that** the data are transferred using a second data communication protocol via the clock contact (CLK) by modulating the clock signal of the first data communication protocol with a data signal (TXHI) and transferring the modulated clock signal via the clock contact (CLK).

2. The method according to claim 1, **characterized in that** the at least one first unit is a portable data carrier, and the second unit is a reading device (110) for portable data carriers.

3. The method according to claim 2, **characterized in that** the modulated clock signal is demodulated in the portable data carrier for receiving data when the clock signal (CLK IN) assumes a predetermined value (CLKLO), and the clock signal (CLK MOD) is modulated by the portable data carrier for sending data when the clock signal (CLK IN) assumes a value (CLKHI) other than the predetermined value (CLKLO).

4. The method according to claim 2 or 3, **characterized in that** the reading device (110) recognizes whether more than one data carrier (10, 10', 10") at a time is connected to the reading device (110) via the data communication connection (130).

5. The method according to claim 4, **characterized in that**, if more than one data carrier (10, 10', 10") at a time is connected to the reading device (110) via the data communication connection (130), the reading device (110) controls the direct data communication with the more than one data carrier (10, 10', 10") via an arbiter method.

6. The method according to claim 5, **characterized in that** the arbiter method interrupts the respective data communication connection (130) to all, except for one data carrier (10', 10"), of the more than one data carrier (10, 10', 10") connected to the reading device via the data communication connection (130) and carries out the direct data communication with the one remaining connected data carrier (10).

7. The method according to any of claims 1 to 6, **characterized in that** the at least one data carrier (10, 10', 10") interrupts the data communication connection (130) at least temporarily.

8. The method according to any of claims 1 to 7, **characterized in that** the data are transferred from the data carrier to an NFC device (180) of a mobile end device (100) via the reading device (110) connected to the end device (100), having the steps of:
- contacting the at least one data carrier (10, 10', 10") to the reading device (110);
- setting up a data communication connection (130, 114) between the at least one data carrier (10, 10', 10") and the NFC device (180) via the reading device (110);
- carrying out a direct data communication between the at least one data carrier (10, 10', 10") and the NFC device (180) via the set up data communication connection (130, 114);
whereby the data communication between the reading device (110) and the at least one data carrier (10, 10', 10") is carried out by modulating the clock signal (CLK IN) transferred via a clock line (130) between the reading device (110) and the at least one data carrier (10, 10', 10") by the data signal (TXHI).

9. The method according to claim 8, **characterized in that** the direct data communication between the reading device (110) and the NFC device (180) is carried out according to the same communication protocol as the direct data communication between the reading device (110) and the at least one data carrier (10, 10', 10").

10. The method according to claim 8 or 9, **characterized in that** the direct data data communication between the reading device (110) and the NFC device (180) is carried out by means of the S²C Protocol or the Single Wire Protocol.

11. A portable data carrier (10), comprising
a reading device interface (20) which is configured to be contactable to a reading device (110), having a clock contact (CLK) for receiving a clock signal (CLK IN) of a first communication protocol, and a data contact (D) for transferring data according to the first communication protocol via the data contact (D), and
a control device (50) which is adapted to set up a data communication connection (130) to an end device (100) contacted via the reading device interface (20) and to carry out a data communication with the end device (100) via the set up data communication connection (130), **characterized by**
a data carrier modem (40) which is adapted for transferring data via the clock contact as a clock signal (CLK IN) modulated by a data signal (TXHI).

12. The data carrier (10) according to claim 11, **characterized in that** the data carrier is adapted for executing the steps of the data carrier according to a method from claims 2 to 10.

13. The data carrier (10) according to claim 11 or 12, **characterized in that** the data carrier modem is adapted to modulate the clock signal when the level of the clock signal assumes a first value, and to demodulate the clock signal when the level of the clock signal assumes a second value.

14. The data carrier (10) according to any of claims 11 to 13, **characterized in that** the reading device interface (20) is configured such that the clock line (130) is establishable by contacting the data carrier (10) to the reading device (110) of the end device (100), and the data communication connection (130) between the data carrier (10) and the reading device (110) is formed by the clock line (130).

15. The data carrier (10) according to any of claims 11 to 14, **characterized in that** the data carrier (10) is a chip card or a (U)SIM mobile radio card or a mass memory card or a USB token.

16. A system, comprising a second unit, preferably with a reading device (110) for taking up at least one portable data carrier (10, 10', 10") as a first unit, and at least the first unit which is preferably configured as a portable data carrier (10) according to any of claims 11 to 15, whereby the first and the second unit are adapted for executing a method according to any of claims 1 to 10.

17. A system, comprising a mobile end device (100) with an NFC device (180), a reading device (110) connected to the end device (100) and directly connected to the NFC device (180), for taking up at least one portable data carrier (10, 10', 10"), and at least one portable data carrier (10) according to any of claims 11 to 15 and suitable for carrying out a method according to any of claims 2 to 10.

## Revendications

1. Procédé de communication de données entre au moins une première unité (10, 10', 10") pourvue de broches et une seconde unité (110), comprenant les étapes :
- réception, sur une broche d'horloge (CLK) de la première unité (10), d'un signal d'horloge (CLK IN) qui est reçu selon un premier protocole de communication de données pour l'échange de données par l'intermédiaire d'une broche de données (D) de la première unité;
- transmission de données entre la au moins une première unité (10, 10', 10") et la seconde unité (110);
**caractérisé en ce que** les données sont transmises par l'intermédiaire de la broche d'horloge (CLK) à l'aide d'un second protocole de communication de données par modulation du signal d'horloge du premier protocole de communication de données avec un signal de données (TXHI) et par transmission du signal d'horloge modulé par l'intermédiaire de la broche d'horloge (CLK).

2. Procédé selon la revendication 1, **caractérisé en ce que** la au moins une première unité est un support de données portable et la seconde unité est un dispositif de lecture (110) pour supports de données portables.

3. Procédé selon la revendication 2, **caractérisé en ce que**, dans le support de données portable pour la réception de données, quand le signal d'horloge (CLK IN) adopte une valeur prédéterminée (CLKLO), le signal d'horloge modulé est démodulé, et pour l'envoi de données, quand le signal d'horloge (CLK IN) adopte une autre valeur (CLKHI) que la valeur prédéterminée (CLKLO), le signal d'horloge (CLK MOD) est modulé par le support de données portable.

4. Procédé selon la revendication 2 ou 3, **caractérisé en ce que** le dispositif de lecture (110) reconnaît si plus d'un support de données (10, 10', 10") est connecté en même temps avec le dispositif de lecture (110) par l'intermédiaire de la connexion de communication de données (130).

5. Procédé selon la revendication 4, **caractérisé en ce que**, si plus d'un support de données (10, 10', 10") est connecté en même temps avec le dispositif de lecture (110) par l'intermédiaire de la connexion de communication de données (130), le dispositif de lecture (110) commande la communication de données directe avec les plus d'un supports de données (10, 10', 10") par l'intermédiaire d'un procédé Arbiter.

6. Procédé selon la revendication 5, **caractérisé en ce que** le procédé Arbiter interrompt la connexion de communication de données (130) respective avec tous les supports de données (10, 10', 10") sauf un support de données (10, 10") des plus d'un des supports de données connectés avec le dispositif de lecture par l'intermédiaire de la connexion de communication de données (130) et effectue la communication de données directe avec le un support de données (10) connecté restant.

7. Procédé selon une des revendications de 1 à 6, **caractérisé en ce que** le au moins un support de données (10, 10', 10") interrompt au moins temporairement la connexion de communication de données (130).

8. Procédé selon une des revendications de 1 à 7, **caractérisé en ce que** les données sont transmises du support de données à un dispositif NFC (180) d'un terminal mobile (100) par l'intermédiaire du dispositif de lecture (110) connecté au terminal (100), comprenant les étapes :
- mise en contact du au moins un support de données (10, 10', 10") avec le dispositif de lecture (110);
- établissement d'une connexion de communication de données (130, 114) entre le au moins un support de données (10, 10', 10") et le dispositif NFC (180) par l'intermédiaire du dispositif de lecture (110);
- réalisation d'une communication de données directe entre le au moins un support de données (10, 10', 10") et le dispositif NFC (180) par l'intermédiaire de la connexion de communication de données (130, 114) établie;
la communication de données entre le dispositif de lecture (110) et le au moins un support de données (10, 10', 10") étant réalisée par modulation, par le signal de données (TXHI), du signal d'horloge (CLK IN) transmis par l'intermédiaire d'une ligne d'horloge (130) entre le dispositif de lecture (110) et le au moins un support de données (10, 10', 10").

9. Procédé selon la revendication 8, **caractérisé en ce que** la communication de données directe entre le dispositif de lecture (110) et le dispositif NFC (180) est réalisée selon le même protocole de communication que la communication de données directe entre le dispositif de lecture (110) et le au moins un support de données (10, 10', 10").

10. Procédé selon la revendication 8 ou 9, **caractérisé en ce que** la communication de données de données (sic) directe entre le dispositif de lecture (110) et le dispositif NFC (180) est réalisée au moyen du protocole S²C ou du protocole Single-Wire.

11. Support de données portable (10), comprenant
une interface de dispositif de lecture (20) qui est conçue pour pouvoir être mise en contact avec un dispositif de lecture (110), comportant une broche d'horloge (CLK) destinée à recevoir un signal d'horloge (CLK IN) d'un premier protocole de communication et une broche de données (D) destinée à transmettre des données selon le premier protocole de communication par l'intermédiaire de la broche de données (D), et
un dispositif de commande (50) qui est configuré pour établir une connexion de communication de données (130) avec un terminal (100) mis en contact par l'intermédiaire de l'interface de dispositif de lecture (20) et pour réaliser une communication de données avec le terminal (100) par l'intermédiaire de la connexion de communication de données établie (130), **caractérisé par**
- un modem de support de données (40) qui est configuré pour transmettre des données par l'intermédiaire de la broche d'horloge en tant que signal d'horloge (CLK IN) modulé par un signal de données (TXHI).

12. Support de données (10) selon la revendication 11, **caractérisé en ce que** le support de données est configuré pour accomplir les étapes du support de données selon un procédé issu des revendications 2 à 10.

13. Support de données (10) selon la revendication 11 ou 12, **caractérisé en ce que** le modem de support de données est configuré pour moduler le signal d'horloge quand le niveau du signal d'horloge adopte une première valeur, et pour démoduler le signal d'horloge quand le niveau du signal d'horloge adopte une seconde valeur.

14. Support de données (10) selon une des revendications de 11 à 13, **caractérisé en ce que** l'interface de dispositif de lecture (20) est conçue de telle manière que la ligne d'horloge (130) peut être créée par mise en contact du support de données (10) avec le dispositif de lecture (110) du terminal (100) et **en ce que** la connexion de communication de données (130) entre le support de données (10) et le dispositif de lecture (110) est constituée par la ligne d'horloge (130).

15. Support de données (10) selon une des revendications de 11 à 14, **caractérisé en ce que** le support de données (10) est une carte à puce ou une carte de téléphonie mobile (U)SIM ou une carte de mémoire de masse ou un token USB.

16. Système, comprenant une seconde unité, de préférence avec dispositif de lecture (110) pour recevoir au moins un support de données (10, 10', 10") portable en tant qu'une première unité, ainsi qu'au moins la première unité qui est conçue de préférence sous forme de support de données portable (10) selon une des revendications de 11 à 15, la première et la seconde unité étant adaptées à accomplir un procédé selon une des revendications de 1 à 10.

17. Système, comprenant un terminal (100) mobile comprenant un dispositif NFC (180), un dispositif de lecture (110) connecté au terminal (100) et directement connecté au dispositif NFC (180) pour recevoir au moins un support de données (10, 10', 10") portable ainsi qu'au moins un support de données (10) selon une des revendications de 11 à 15 et adapté à la réalisation d'un procédé selon une des revendications de 2 à 10.
